# EUROPEAN PATENT APPLICATION

(11) **EP 2 249 299 A1**
(43) Date of publication of application: **10.11.2010**
(21) Application number: 10162220.7
(22) Date of filing: 06.05.2010
(51) Int. Cl.: G06Q 10/00, G06F 17/30

(54) **Contextualizing business intelligence reports based on context driven information**

(30) Priority: 06.05.2009 US 436150
(71) Applicant: Business Objects Software Limited, Dublin 1 (IE)
(72) Inventor: Gaulin, Pascal, D-69190 Walldorf (DE); Marinescu, Dan Cristian, D-69190 Walldorf (DE); Grosselin, Jean-Claude, D-69190 Walldorf (DE); Perdigeon, Stephane, D-69190 Walldorf (DE)
(74) Representative: Kazi, Ilya

(57) **Abstract**

Disclosed are methods and systems for displaying a business intelligence report on a client computing device in the client-server network according to a change in contextual information. The methods and systems involve receiving a context update message from a context acquisition module associated with the client computing device through one or more software interfaces provided by the context acquisition module. The context update message includes a contextual type for identifying a contextual business object, defining the business intelligence report at least in part. The business intelligence report is updated by applying the change in the contextual information provided by the context update message. The updated business intelligence report is transmitted to the client device and the updated business intelligence report is displayed on the display client-computing device.

## Description

### FIELD OF THE INVENTION

The invention generally relates to business intelligence reporting on computing devices.

### BACKGROUND OF THE INVENTION

Business Intelligence (BI) generally refers to a category of software systems and applications used to improve business enterprise decision-making and governance. These software tools provide techniques for analyzing and leveraging enterprise applications and data. These tools are commonly applied to financial, human resource, marketing, sales, service provision, customer and supplier analyses. More specifically, these tools can include: reporting and analysis tools to analyze, forecast and present information, content delivery infrastructure systems for delivery, storage and management of reports and analytics, data warehousing systems for cleansing and consolidating information from disparate sources, and integration tools to analyze and generate workflows based on enterprise systems. BI tools work with data management systems, such as relational databases or On Line Analytic Processing (OLAP) systems used to collect, store, and manage raw data and transactional enterprise systems that generate data.

Reporting tools and other business intelligence applications allow a user to explore business data by consolidating raw data from disparate sources, performing calculations on the data (e.g., aggregate, subtract, etc.) and specifying various views of the underlying data (e.g., specifying various dimensions and measures along which they would like to dissect data). In addition to having wide control over how to manipulate raw data to view the exact dimensions and measures of interest, business users want to be able to display reports whose underlying data can change based on contextual information.

Contextual information can take many different forms. It could be geographic (e.g., user location, location of an object of interest), some information descriptive of natural conditions (e.g., temperature in a warehouse) load or capacity utilization of a resource (e.g., number of persons in a convention hall, number of workers in a factory) and the like. Change in such contextual information can influence what data a user is interested in seeing, and in what form, on a BI application. However, interjecting such contextual information into reports today requires a manual intervention by the user. Thus, there is a need to automatically integrate the contextual information into BI reports.

### SUMMARY OF THE INVENTION

Disclosed are methods and systems to generate a BI report for displaying it on a client computing device according to contextual information. A context update message is received from a context acquisition module through one or more software interfaces. The context update message includes a contextual type for identifying the contextual entity at least in part in a business object, which defines the BI report and a change in the contextual information for updating the BI report. The BI report is updated by updating the contextual entity based on the change in contextual information provided by the context update message. The updated BI report is transmitted to a display of the client computing device.

Also provided are corresponding computer programs or computer program products any of which may be in the form of an article of manufacture, comprising a machine readable storage medium comprising instructions which when executed by a machine cause the machine to perform operations.

In an embodiment, when a user loads a BI report or demands a BI report refresh, based on the contextual information received from the contextual acquisition module, the contextual entity is identified for calculating the BI report data. The BI report is generated based on the change in the contextual information.

Additional features and advantages will be made apparent from the following detailed description of illustrated embodiments, which proceeds with reference to the accompanying drawings.

### BRIEF DESCRIPTION OF THE DRAWINGS

A better understanding of embodiments of the invention are illustrated by examples and not by way of limitation, the embodiments can be obtained from the following detailed description in conjunction with the following drawings, in which:
FIG. 1 is an exemplary block diagram illustrating a client-server system according to an embodiment of the invention.
FIG. 2 is a block diagram of an exemplary client-server network for displaying a business intelligence report on a client computing device in the client-server network according to changing contextual information.
FIG. 3 illustrates a block diagram for adding a contextual entity into a semantic layer according to an embodiment of the invention.
FIG. 4 is a flow diagram illustrating an exemplary process for displaying a business intelligence report on a client computing device in the client-server network according to changing contextual information.
FIG. 5 is a flow diagram illustrating an exemplary business scenario of applying a contextual data as a filter in a query according to an embodiment of the invention.
FIG. 6 is a flow diagram illustrating an exemplary business scenario of applying a contextual data as a measure for report calculations in a query, according to an embodiment of the invention.

### DETAILED DESCRIPTION

Semantic layer is an abstraction layer that allows access to data without knowing the underlying source. A universe is a specific form of a semantic layer that is a partial or total representation of the database, designed for a particular application or group of users. A universe contains a set of business objects composing a representation of data for a group of users sharing the same vocabulary. A business object is a user based representation of data.

The universe contains a number of business objects, each business object generally includes references to entities of the underlying semantic layer and may also contain formulas for report calculations. The business objects are used by BI applications. BI generally refers to software tools used to improve business enterprise decision-making. These tools are commonly applied to financial, human resource, marketing, sales, customer and supplier analyses. More specifically, these tools can include reporting and analysis tools to present information, content delivery infrastructure systems for delivery and management of reports and analytics, data warehousing systems for cleansing and consolidating information from disparate sources, and data management systems to collect, store, and manage raw data.

Common computational operations in a BI system are querying and filtering operations. Queries are used to create, modify, retrieve and manipulate data in a data source, such as, a database, a data warehouse, a plurality of reports, and the like. A filter is a condition used to limit information retrieved from a data source to a subset of the whole result of an unfiltered query. Filters are usually expressed in the form of a logical expression that states the condition. Often, users of BI tools are interested in limited subsets of records in a data source, so filtering operations are common. Filtering transforms the data into a small set of information making it suitable for analysis.

A report refers to information retrieved from a data source (e.g., a database, a data warehouse, and the like), based at least on raw data returned as part queries. Reports may be generated by applying data analytics operations to manipulate the raw data and the visualization of analytical data according to report schemas. Business objects can be used to specify the queries including the filters and the report schema thus enabling structuring of such reports using simple terms. In fact, there are BI applications that allow business objects to be dragged and dropped into the applications to create reports. One factor that could affect the data represented in the reports could be contextual information.

The contextual information that can affect a report can be in many different forms depending on the type of data represented in the report. For instance, a Global Positioning System (GPS) enabled sensor on a mobile device could supply location coordinates as contextual information to influence a report that relies on geography as one of its filter conditions. Similarly, radio frequency (RF) enabled temperature sensors could transmit temperature data as contextual information to a report influenced by temperature data. In one embodiment, the contextual information can be modeled as an entity of the semantic layer comprising details about the parameters of a context of user's interest. A business object may be defined by using a column or a field of the contextual entity, such kind of business object is known as contextual business object. For instance, the contextual business object can be used as a filter object to specify filtering criteria in a query. The contextual entity column or field could also be used to create a measure or a dimension type business object.

The business objects can be used as a filter. When business objects are partial or total representation of a contextual entity field or column, a contextual filter is applied to filter the BI report based on the contextual information provided by a context acquisition module. Filters are applied to the data set via queries (e.g., Structured Query Language (SQL) queries and Multidimensional Expressions (MDX) queries) based on the user's context. The business objects can also be measures. When business objects that are partial or total representation of a contextual entity field or column defined as measures are applied to the BI report, a report calculation has to be performed. The contextual business objects can also be dimensions. When business objects that are partial or total representation of a contextual entity field or column defined as a dimension are applied to the BI report, the cube sides, categories, columns or data sets are specified using the contextual data. In one aspect, the BI report is displayed to a user based on the contextual data provided by the contextual business objects. Disclosed herein are methods and systems to display a BI report according to the contextual information of the user, without manual intervention of the user in identifying the contextual information influencing a BI report.

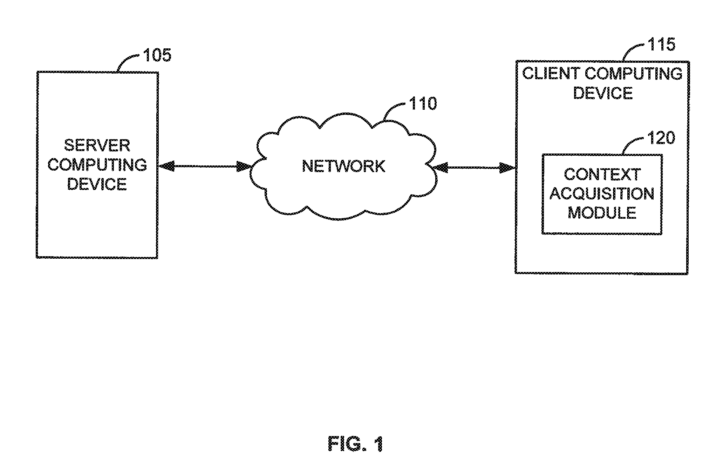

FIG. 1 is an exemplary block diagram illustrating a client-server system according to an embodiment of the invention. The block diagram includes a server computing device 105, a network 110, and a client computing device 115 including a context acquisition module 120. The server computing device 105 accepts requests or transmits responses associated with business information of an enterprise infrastructure. The server computing device 105 may also obtain one or more streams of the business information from a client computing device 115. The server computing device 105 communicates with the client computing device 115 through a network 110. In one embodiment, the client computing device 115 includes a context acquisition module 120 operable for obtaining or generating contextual information. The client computing device 115 may include, but is not limited to, a personal computer, portable devices like personal digital assistants (PDA), mobile phone and wireless devices. The network 110 may include, but is not limited to, local area network (LAN), wide area network (WAN), metropolitan area network (MAN), public switched telephone network (PSTN), Bluetooth network, internet, intranet and Ethernet.

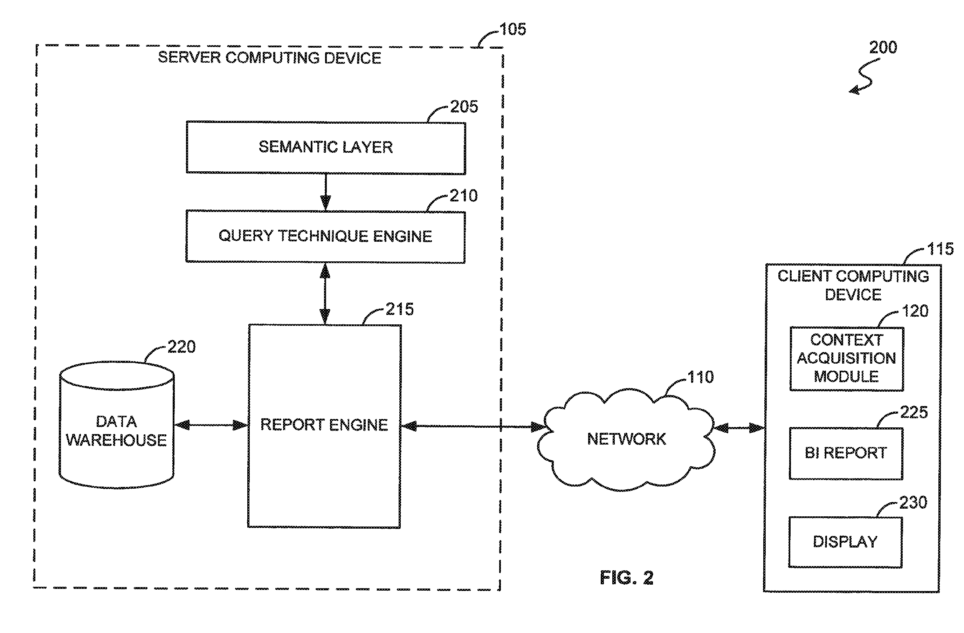

FIG. 2 is a block diagram of an exemplary client-server network for displaying a business intelligence report on a client computing device in the client-server network according to changing contextual information. The client-server network 200 includes a server computing device 105, a network 110 and a client computing device 115. The server computing device 105 includes a semantic layer 205, a query technique engine 210, a report engine 215 and a data warehouse 220. The client computing device 115 includes a context acquisition module 120 for generating contextualized BI report 225. The contextualized BI report is displayed on the display 230 of the client computing device 115.

The semantic layer 205 defines the data entities and their relations using a schema based on the data source metadata. The semantic layer 205 exposes business objects that can be used by a business user. The business objects are defined using tables metadata and can contain calculations. The semantic layer 205 also includes tables defining attributes, metadata based on an entity relationship model, dimension, measure, detail, stream adapter metadata, event driven universe metadata. The semantic layer 205 also includes contextual entities, which are used for creating contextual business objects.

A user can define a query in the query technique engine 210 based on business objects. When the user defines a query, business objects having measures and dimensions associated with the user-defined query are retrieved from the semantic layer 205. The business objects allow a user to create queries based on a representation of semantic layer 205 designed by an administrator. In an embodiment, an ordinary business user defines a business query. The defined query is transmitted to the report engine 215. As discussed above, contextual data can be supplied to the query technique engine 210 and the report engine 215, for instance, to create and generate a contextualized BI report 225. The contextual data, in one embodiment, could come from context acquisition module 120 such as a sensor, sensing contextual information such as temperature in a warehouse, GPS location and so on. In one embodiment, the client computing device 115 could be a mobile device and the mobile device itself could also house the context acquisition module 120 for sensing the contextual information, which may be related to the surroundings or the current location of the mobile device. In another embodiment, the user enters the contextual information manually.

In one embodiment, client computing device 115 comprises software interfaces operable for communicating with the report engine 215 to supply the contextual information. The contextual information may be added as a contextual entity into an existing semantic layer 205. The contextual identifier (ID) and the contextual value form the contextual metadata that can be used to define the contextual entity in the semantic layer 205. For instance, the contextual information obtained through a context update message could comprise a contextual type that can be used to identify which of the business objects are corresponding to the contextual entity. The contextual business object could be used to filter a BI report 225 in order to change the report data based on new contextual information provided by the context acquisition module 120 without any user intervention. The contextual business object could also be used as measures in report calculations and thus, any changes in the contextual information would be reflected in the BI report data as well. The query technique engine 210 acquires the contextual information parameters related to the query from the semantic layer 205. The query technique engine 210 receives the contextual IDs and contextual values as parameters. At the report engine 215, contextual data corresponding to the contextual IDs and contextual values is determined by matching the contextual type with the contextual business objects that are used in the query. In response to the execution of the query, a result data stored in the data warehouse 220 relevant to the query is retrieved. The result data stored in the data warehouse 220 may be the name of a recipient, an address of delivery, contact details of the recipient and so on. At the report engine 215, the result data is retrieved from the data warehouse 220 and is used to generate the BI report. The contextual data used in execution of the query will be based on the contextual information obtained in the most recent context update message. The report engine 215 transmits the result data to the BI report 225. The BI report 225 is updated with the result data. The updated BI report is displayed on the display 230 of the client computing device 115. Thus, the contextual business object automatically fills in report prompts or report parameters without any user intervention.

In an embodiment, the query defined in the query technique engine 210 includes specifying a filtering condition as a part of the query to filter the data of the B I report. For example, if the business user intends to filter the query by geographical location, the filter would be specified in the query using the contextual business object. When the context acquisition module 120 acquires contextual information like the geographical location, the client computing device sends the geographical location along with the contextual ID to the report engine 215. The query technique engine 210 will generate a query containing contextual ID, contextual value and filtering condition based on a geographical location and transmits the query to the report engine 215. The query is executed at the report engine 215. In response to the executed query, the data warehouse 220 looks up for the data associated with the query. The result data filtered based on the geographical location is obtained from the execution of the query. This result data is used to update the BI report 225. The BI report 225 is transmitted to the client computing device 115. The BI report 225 is displayed to the business user.

In another embodiment, the query defined in the query technique engine 210 includes report calculations. For example, if the business user intends to calculate deviation in the temperature, the calculation would be specified in the query itself. The contextual business object applies other business objects meant for report calculations. The report engine 215 executes the query with contextual ID, contextual value and parameters related to calculate the temperature deviation at the report engine. A result data is generated at the report engine 215. The BI report 225 is updated with the result data and is displayed on the display 230 of the client computing device 115.Those of ordinary skill in the art will recognize that the functionality on the server computing device may be spilt across a plurality of server computing devices.

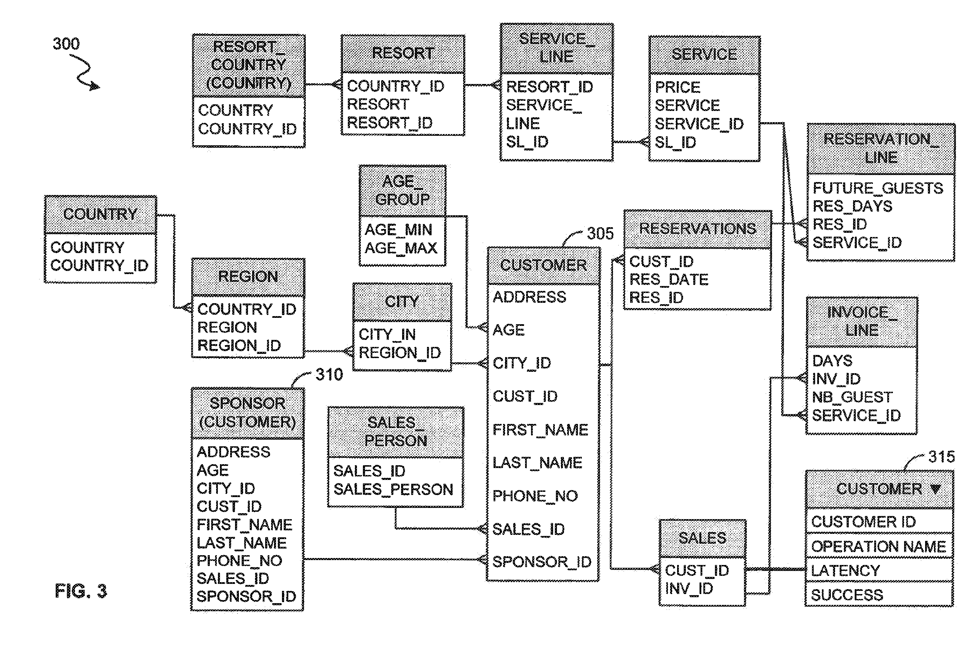

FIG. 3 illustrates a block diagram for adding a contextual entity into a semantic layer according to an embodiment of the invention. The semantic layer contains a collection of entities. Business scenario 300 includes entities such as "Customer" 305. The entity "Customer" 305 contains fields such as address, age, city_ID, cust_ID, first_name, last_name, phone_number, sales_ID and sponsor_ID. The entity "Sponsor (customer)" 310 also has a set of fields. To the existing semantic layer, a new entity based on contextual metadata is added. In business scenario 300, the contextual entity "Customer" 315 is added. The contextual entity "Customer" 315 has fields such as CustomerID, Operation Name, latency and success associated with it. The business objects may use the fields of the contextual entity "Customer" 315. In an embodiment, the contextual entity refers to an underlying abstract contextual data source. The contextual entity has a property that allows the query technique engine to replace the contextual entity fields by contextual values when generating query statements. The contextual values may also be used for retrieving data from the data warehouse.

Referring to FIG. 2, an ad-hoc query can be created by a business user, which can contain business objects that are using contextual entity fields seamlessly. At execution time (e.g., report generation), at the query technique engine, the contextual values and contextual IDs will be provided to the report engine 215 for query statements generation. Generating the query statements at the query technique engine 2 10 includes replacing the entities' field names with contextual identifiers or contextual values. The contextual entity name is removed from the query statement. The contextual values and contextual IDs are obtained from the context acquisition module on the client computing device 115. If the client computing device 115 does not have the context acquisition module 120, the user has to enter the values manually. A query technique algorithm will generate as many queries as the number of contextual identifiers or contextual values, by putting them in the query statements, by replacing the contextual entities with field definitions, which will be sent to a data warehouse 220. The report engine 215 will execute the queries on the data warehouse 220 and regenerate the BI reports with the new data. The BI reports are displayed on the display of the client computing device 115.

In an embodiment, the contextual information is automatically identified. For automatic identification of the contextual information, a contextual information type is provided by a contextual provider application, and specified within the semantic layer 205. This links the contextual business object and any other business objects that are based on the contextual entities. The contextual entities can be identified using query technique algorithms, at the design time level (e.g., during an entity addition to an existing semantic layer definition) and runtime level (e.g., when replacing the contextual entities fields with the effective contextual data). A contextual ID field or column may also be used to relate the contextual IDs and contextual values to the data transmitted from the data warehouse 220 by the query technique at the runtime level.

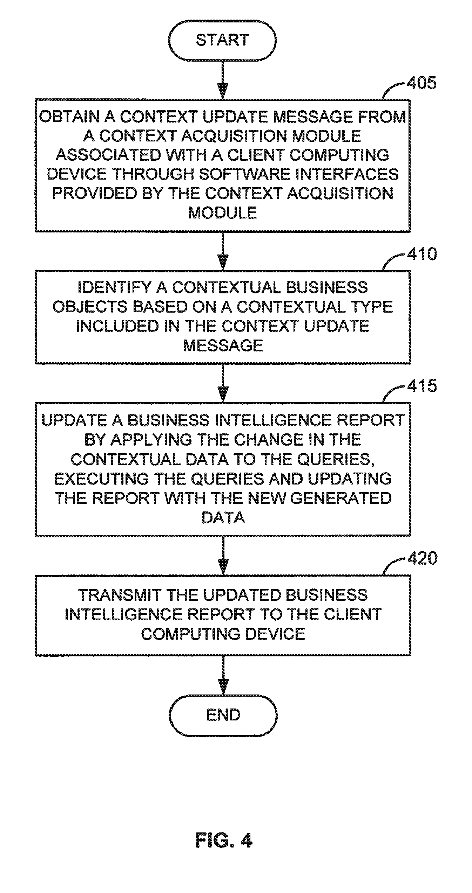

FIG. 4 is a flow diagram illustrating an exemplary process for displaying a business intelligence report on a client computing device in the client-server network according to changing contextual information. The method involves obtaining a context update message from a context acquisition module associated with the client computing device through one or more software interfaces provided by the context acquisition module at process block 405. The context update message comprises a contextual type. At process block 410, a contextual business object is identified based on the contextual type included in the context update message. The contextual type identifies the contextual business object used in a business intelligence report at least in part and a change in the contextual information updating the business intelligence report. At process block 415, the business intelligence report is updated by applying the change in the contextual data provided by the context update message. At process block 420, the updated business intelligence report is transmitted to the client computing device. The updated business intelligence report is displayed on the display of the client computing device.

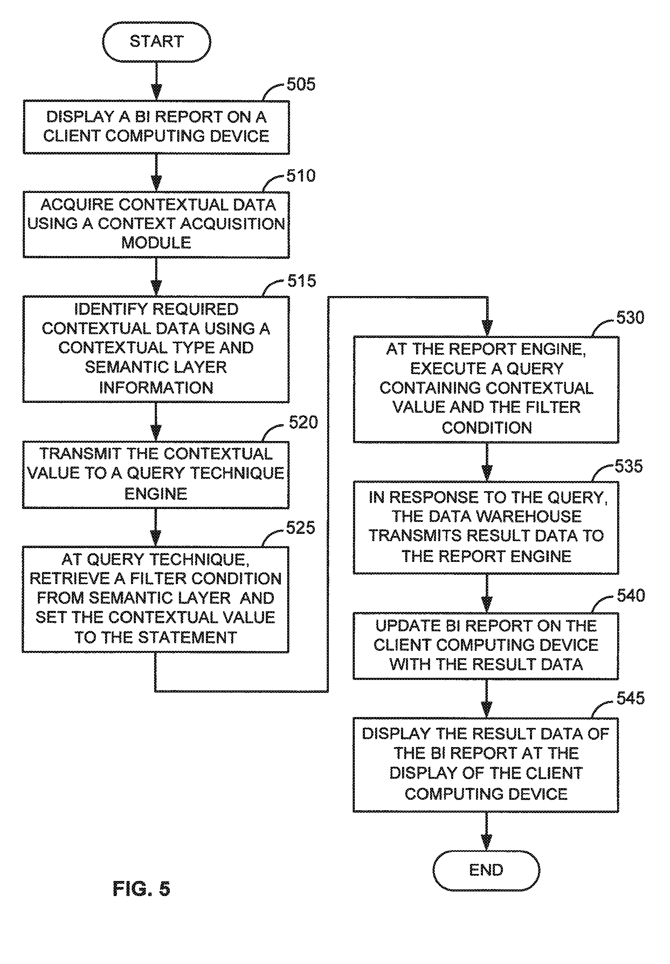

FIG. 5 is a flow diagram illustrating an exemplary business scenario of applying a contextual business object as a filter in a query according to an embodiment of the invention. Consider a business scenario where the context of a BI report is at least partially defined by a barcode being read in a warehouse. Suppose the BI report relates to shipping statistics related to the products associated with the barcode and the warehouse in which the barcode is being read. Suppose a query defined at a query technique engine is "return list of closest shipping points accepting products of this barcode". The result would rely on a context that includes the combination of a current product and geographical location of where that product is located. A filter could also be specified in the query. In this business scenario, for instance, the filter could be specified as geographical location of shipping points no further than some specified distance. At process block 505, a BI report is displayed on the client computing device. The BI report may be refreshed by the user to update it based on contextual information. According to the business scenario, the bar code of a parcel is detected using a context acquisition module on a client computing device. In this business scenario, a mobile device acts as a client computing device, the scanner on the mobile device acts a context acquisition module. If the client computing device does not have a context acquisition module, then the user will have to enter the details of the barcode manually. The scanner on the mobile device detects the barcode. The context acquisition module acquires contextual information at process block 510. In this business scenario, the contextual information will be the barcode of the parcel, which can indicate the product being scanned. The mobile device could also indicate the geographical location of where the barcode is being scanned. The contextual information comprises contextual ID as well as corresponding contextual values. At process block 515, required contextual data is identified using the contextual type and semantic layer information. In this business scenario, the contextual table has data fields, the data field receives the contextual barcode ID and the geographical location. At process block 520, a filter condition and a contextual value is transmitted as a parameter to a query technique engine. In this scenario, the filter that is defined may be a geographical location of where the barcode is being read. At process block 525, the filter condition and the contextual value is retrieved at a query technique. In addition, a statement using the filter condition and the contextual value are created at the query technique engine. At process block 530, the report engine executes a query containing contextual value and the filter condition. In response to the executed query, the data warehouse transmits result data associated with the query to the report engine at process block 535. The BI report on the client computing device is updated with the result data at process block 540.The result data is filtered based on the geographical location. The BI report is displayed on a display of the client computing device at process block 545. The result data may include delivery details of the parcel such as name of the recipient, address of the recipient, contact number and so on. The contextual filter in this scenario will be filtering the details of delivery based on geographical location.

Consider another business scenario, which explains filtering geographical location using a contextual business object. Consider a bus driver who needs to pickup passengers from a defined list of hotels situated in different locations of the city. Assuming that not all hotels in the list have passengers waiting to be picked up, the bus driver can optimize his trips if he knew the next location of the hotel in the list where he needs to pickup passengers. The contextual information is of high priority in such business scenarios. The global positioning system (GPS) on the mobile device carried by the driver returns contextual values relating to the locations of the hotels. The BI report on the display device which contains the list of the hotels is filtered to show the list of the hotels where the passengers need to be picked up.

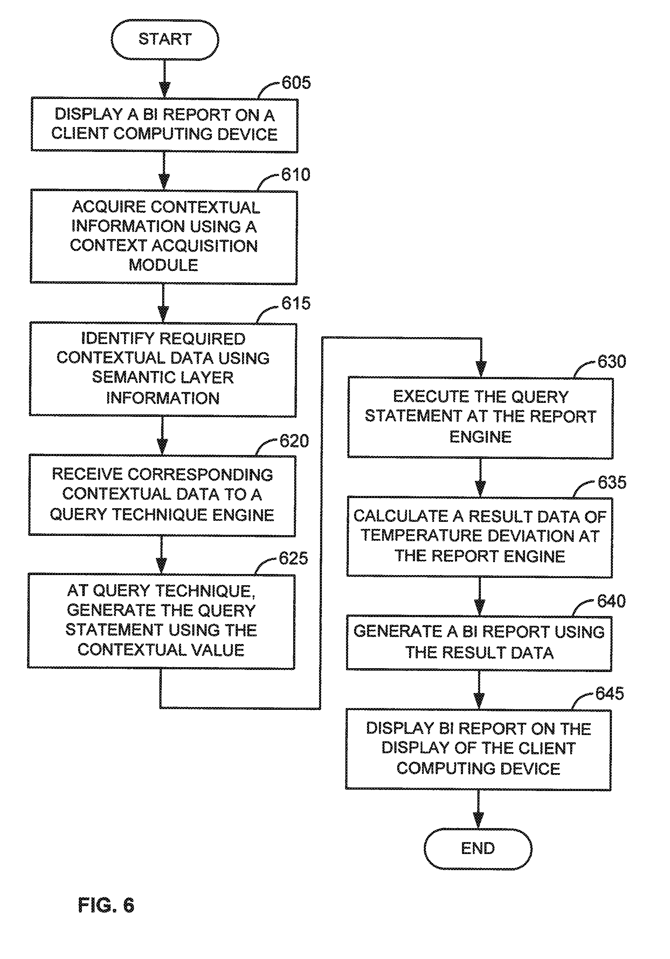

FIG. 6 is a flow diagram illustrating an exemplary business scenario of applying a contextual data object as a measure for report calculations in a query, according to an embodiment of the invention. Consider a business scenario where a business user is in a meat-packing warehouse. The query defined is "calculate a temperature deviation". The business user has a client computing device with a radio frequency identifier (RFID) enabled temperature sensor. In this business scenario, the RFID enabled temperature sensor is a context acquisition module. At process block 605, a BI report is displayed on the client computing device. The BI report may be refreshed by the user to update it report based on contextual information. According to the business scenario, the temperature reading of the meat-packing warehouse has to be obtained. At process block 610, a context acquisition module on the client computing device acquires contextual information. The contextual information in this scenario will be the temperature reading of the meatpacking warehouse. If the client-computing device does not have a RFID enabled temperature sensor then the user has to enter the temperature values manually. The temperature reading is retrieved by at least one software interface on the context acquisition module. The contextual entity has two data fields, one containing the warehouse ID and the second containing the temperature value, used in this business scenario is for calculating the temperature deviation. At process block 615, required contextual data is identified using the contextual type and the semantic layer information. At process block 620, query technique engine receives the corresponding contextual data. The query technique engine receives contextual data associated with the query. At process block 625, the query technique generates the query statements according to semantic layer schema and contextual data. At process block 630, the report engine executes the query statement on the data warehouse. At process block 635, the result data for temperature deviation is calculated. At process block 640, BI report is updated with the result data. At process block 645, the updated BI report is displayed on the display of the client computing device.

In an embodiment, an alert relating to the temperature deviation at the meat-packing warehouse is transmitted to the business user in form of a short text message. In another embodiment, the temperature obtained for the temperature is used as a group break key. For instance, a group break key may be used to group food in the meat-packing warehouse into three categories. The categories being: food to be kept at higher temperature, food to be kept at current temperature and food to be kept at lower temperature. In another embodiment, the group break key is used along with the geographical location of the user.

Embodiments of the invention may include various steps as set forth above. The steps may be embodied in machine-executable program code, which causes a general-purpose or special-purpose processor to perform certain steps. Alternatively, these steps may be performed by specific hardware components that contain hardwired logic for performing the steps, or by any combination of programmed computer components and custom hardware components.

Embodiments of the present invention may also be provided as a tangible machine-readable medium for storing the machine-executable instructions. The tangible CD-ROMs, DVD ROMs, RAMs, EPROMs, EEPROMs, magnetic or optical cards, or any other type of machine-readable media suitable for tangibly storing electronic instructions. The machine-readable medium can provide the instructions stored therein to a computer system comprising a processor capable of reading and executing the instructions to implement the method steps described herein.

It should be appreciated that reference throughout this specification to one embodiment or an embodiment means that a particular feature, structure or characteristic described in connection with the embodiment is included in at least one embodiment of the present invention. These references are not necessarily all referring to the same embodiment. Furthermore, the particular features, structures or characteristics may be combined as suitable in one or more embodiments of the invention.

Throughout the foregoing description, for the purposes of explanation, numerous specific details were set forth in order to provide a thorough understanding of the invention. It will be apparent, however, to one skilled in the art that the invention may be practiced without some of these specific details. The detailed description as set forth above includes descriptions of method steps. However, one skilled in the art will understand that the order of the steps set forth above is meant for the purposes of illustration only and the claimed invention is not meant to be limited only to the specific order in which the steps are set forth. Accordingly, the scope and spirit of the invention should be judged in terms of the claims, which follow.

## Claims

1. A method implemented by a server computing device in a client-server network for displaying a business intelligence report on a client computing device in the client-server network according to changing contextual information, the method comprising:
obtaining a context update message from a context acquisition module associated with the client computing device through one or more software interfaces provided by the context acquisition module, the context update message comprising a contextual type;
based on the contextual type, identifying a contextual business object defining the business intelligence report at least in part;
updating the business intelligence report by applying the change in the contextual information provided by the context update message; and
transmitting the updated business intelligence report to the client device, the client device operable to display the business intelligence report.

2. The method of claim 1, wherein the contextual business object is an element of a semantic layer and the method further comprises identifying portions of the business intelligence report definition associated with the contextual business object.

3. The method of claim 1 or 2, wherein updating the business intelligence report by applying the change in the contextual information provided by the context update message comprises changing values of parameters in data tables associated with the contextual business object.

4. The method of claim 1 or 2 or 3, wherein the contextual information comprises geographical location of the client computing device, the context update message comprises data indicative of the geographical location of the client and updating the business intelligence report is based at least in part on changed geographic location of the client computing device.

5. The method of any of claims 1 to 4, wherein identifying the contextual business object defining the business intelligence report at least in part comprises applying the contextual business object for filtering the business intelligence report.

6. The method of any of claims 1 to 5, wherein identifying a contextual business object defining the business intelligence report at least in part comprises applying the contextual business object for report calculations in the business intelligence report.

7. The method of any of claims 1 to 6, wherein using a contextual business object within a business intelligence report at least in part comprises determining a group break key of the business intelligence report, the group break key groups the contextual information into a category.

8. A computer program product comprising instructions which when executed by at least one processor cause the at least one processor to perform a method comprising:
receiving a business query definition at a query technique engine of a server computing device wherein the business query definition comprises one or more contextual business objects selected from a semantic layer associated with the server computing device;
obtaining a context update message received from a context acquisition module on a client computing device, wherein the context update message comprises a contextual type;
identifying at least one of the one or more contextual business objects of the semantic layer in the business query, based on the contextual type associated with the context update message;
updating the identified contextual business objects at the semantic layer of the server computing device;
processing the business query at a report engine of the server computing device by retrieving the updated contextual data associated with the business query;
updating a business intelligence report associated with the business query based on result data provided by execution of the business query;
transmitting the updated business intelligence report to the client computing device; and
displaying the updated business intelligence report on a display of the client computing device.

9. The computer program product of claim 8, wherein updating the identified contextual business objects at the semantic layer of the server computing device comprises identifying portions of the business query definition comprising the contextual business object or wherein updating the identified contextual business objects at the semantic layer of the server computing device comprises updating the contextual information associated with the identified contextual business objects with the contextual information received from the context update message.

10. The computer program product of claim 8 or 9, wherein receiving the business query definition at a query technique engine of a server computing device comprises specifying filter conditions in the business query or wherein receiving the business query definition at the query technique engine of the server computing device comprises specifying report calculations in the business query.

11. The computer program product of claim 8, 9 or 10, wherein updating the identified contextual business objects at the semantic layer of the server computing device with the context update message comprises changing values of parameters in data tables associated with the identified contextual business objects.

12. The computer program product of claim 8, 9, 10 or 11, wherein processing the business query at the report engine of the server computing device comprises generating a query statement at the query technique engine based on the updated contextual data.

13. A client-server computer system programmed for displaying a business intelligence report on a client computing device of the client-server computer system based on a contextual information, the system comprising:
a client computing device comprising a context acquisition module adapted to acquire the contextual information;
one or more server computing devices comprising:
a semantic layer to store a contextual entity information along with a plurality of different contextual business objects;
a query technique engine in communication with the semantic layer to obtain a business query definition and retrieve the contextual business objects associated with the business query;
a report engine in communication with the query technique engine to execute the business query; and
a data warehouse in communication with the report engine to receive the executed business query from the report engine and to transmit result data to the report engine; and
a display on the client computing device in communication with the one or more server computing devices to display the result data.

14. The client-server computer system of claim 13, wherein the contextual generator generates a contextual type associated with the contextual information.

15. The client-server computer system of claim 13 or 14, wherein the client computing device comprises the context acquisition module operable for acquiring the contextual information to be included in a context update message.

16. The client-server computer system of claim 13, 14 or 15, wherein the report engine is operable for updating a business intelligence report by identifying the contextual data change using the contextual information provided by a context update message.

17. The client-server computer system of claim 13, 14, 15 or 16, wherein the report engine is operable for transmitting an updated business intelligence report to the client computing device.

18. The client-server computer system of claim 13, 14, 15, 16 or 17, wherein the query technique engine is in communication with the semantic layer and is operable for receiving the business query specifying a filter condition as a part of the business query or wherein the query technique engine is in communication with the semantic layer and is operable for receiving the business query specifying a report calculation as a part of the business query.
